# EUROPEAN PATENT APPLICATION

(11) **EP 1 298 456 A1**
(43) Date of publication of application: **02.04.2003**
(21) Application number: 01926002.5
(22) Date of filing: 27.04.2001
(51) Int. Cl.: G01T 7/00, G01T 1/24

(54) **PROBE FOR NUCLEAR MEDICINE DIAGNOSIS**

(30) Priority: 12.05.2000 JP 2000139817
(71) Applicant: Acrorad Co., Ltd., Gushikawa-shi, Okinawa 904-2234 (JP)
(72) Inventor: Shirahata, Takashi, Gushikawa-Shi, Okinawa 904-2234 (JP)
(74) Representative: Müller-Boré & Partner Patentanwälte
(86) International application number: JP0103674
(87) International publication number: WO01086321

(57) **Abstract**

Disclosed is a probe for nuclear medical diagnosis comprising a collimator 3 for controlling an incident direction of a radiation from a subject, and a radiation detector unit 2 disposed adjacent to the collimator 3 for detecting the radiation obtained through the collimator 3, wherein based on a detected data of the radiation obtained from the radiation detector unit 2, a distribution of the radiation energy in the subject is displayed on a liquid crystal display unit 12 as an image. The RI in the focus can be detected and displayed on the display section only by bringing this probe into contact with or close to the body surface.

## Description

### Field of the invention

The present invention relates to a probe for nuclear medical diagnosis which is used to directly display an image of a site to be detected such as a focus by bringing said probe into contact with or close to a body surface of a subject during operation and the like.

### Background of the Invention

In a medical treatment of a malignant tumor, especially for a surgical healing, such a medical treatment method is desired that is low in invasive level and can suppress a complication and also provide a maximum quality of life. Maximum recovery of function after operation may be obtained not by a standardized surgical treatment but by an appropriate tumor excision and enucleation in response to a development level of tumor in individual patient.

In this regards, nowadays, a diagnostic imaging method using CT, MRI, nuclear medicine, ultrasonic wave or the like is broadly employed as a preoperative focus diagnosis. In addition, sometimes a radio isotope (hereafter referred to as RI) diagnostic method is employed during operation. In this method, an operator probes the RI in a focus of a subject (patient) who has been dosed with medical supplies for RI diagnosis by the use of probe, and accordingly this method has an advantage that the appropriate operation can be carried out in response to an individual development level of disease.

Further, up to now, an RI probe system has been provided in which a CdTe (cadmium telluride) probe, which is a minute semiconductor detector for γ-rays, is inserted into an operative incision to bring it into direct contact with an internal organ so as to detect the RI in the focus thus to determine an extent of excision.

However, the conventional RI probe system for operation has an disadvantage that it is difficult to accurately recognize a developing state of disease in a specific location of the focus because generally said system measures only a count value of the RI. Further, such an improved system has been also provided in which adding to a count value, an image of the focus can be displayed through a computer system installed in a location distant from the operating table, but this system has another disadvantage that the operator is required to turn his/her eyes repeatedly to the monitor during operation.

The present invention has been made to solve the problems described above and an object thereof is to provide a prove for nuclear medical diagnosis which makes it possible to detect the RI in the focus in response to a developing state of the disease without bringing it into direct contact with the internal organ of the living body but with only bringing it into contact with or close to a body surface, and also make it possible to display the detected result as the information of disease state on a display section installed in an RI detecting section integrally therewith.

### Disclosure of the Invention

To accomplish the above object, there is provided a probe for nuclear medical diagnosis comprising a collimator for controlling an incident direction of a radiation from a subject, and a radiation detector unit disposed adjacent to said collimator for detecting the radiation obtained through said collimator, wherein based on a detected data of the radiation obtained from said radiation detector unit, a distribution of radiation energy in the subject is indicated as an image on a liquid crystal display unit.

Further, in the probe for nuclear medical diagnosis according to the present invention, the collimator and the radiation detector unit are held in surroundings thereof by a frame made of material containing lead.

Then, a mode for implementing the present invention and preferred embodiments thereof will now be described in detail with reference to the attached drawings.

### Brief Description of the Attached Drawings

Fig. 1 is an exploded perspective view of a probe for nuclear medical diagnosis according to an embodiment of the present invention, illustrating in a reversed condition thereof;
Fig. 2 is an exploded perspective view of a collimator shown in Fig. 1;
Fig. 3 is a perspective view illustrating a mounting of a radiation detector unit and the collimator to a frame, each shown in Fig. 1; and
Fig. 4 is a perspective view for conceptually illustrating a general configuration of the probe for nuclear medical diagnosis according to the present invention.

### Preferred Mode for Implementing Present Invention.

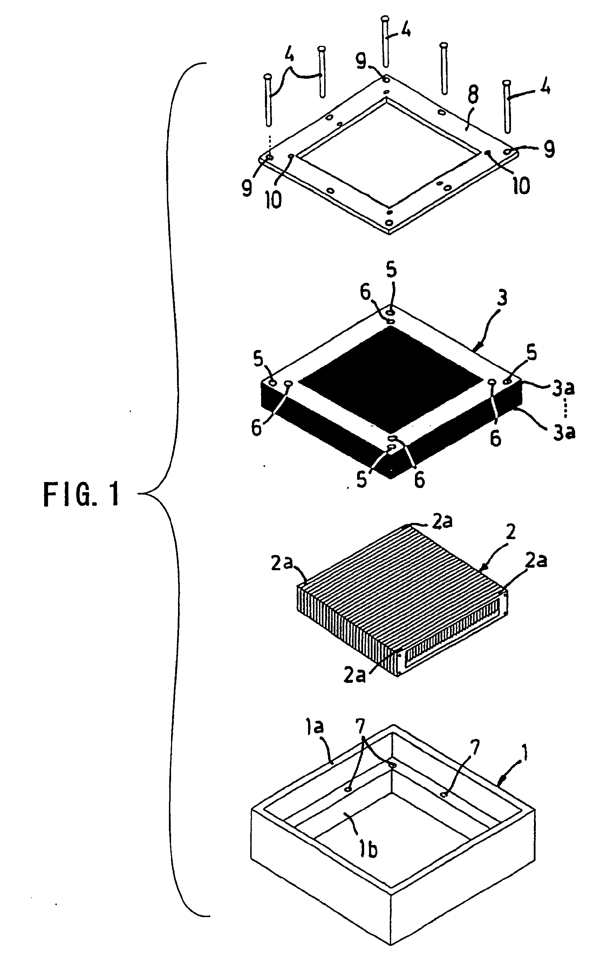

Fig. 1 is an exploded perspective view of a probe for nuclear medical diagnosis according to the present invention, in which reference numeral 1 designates a square frame made of metallic material containing lead which intercepts radiation coming from space, wherein an upper half thereof is configured by a thinner section 1a while a lower half by a thicker section 1b. A radiator detector unit 2 is inserted into said thicker section 1b. A collimator 3 for controlling an incident direction of radiation, that is, for efficiently collecting the radiation to supply it to the radiation detector unit 2, is inserted into the thinner section 1a thereby mounted on said thicker section 1b so as to cover an upper side of the radiation detector unit 2.

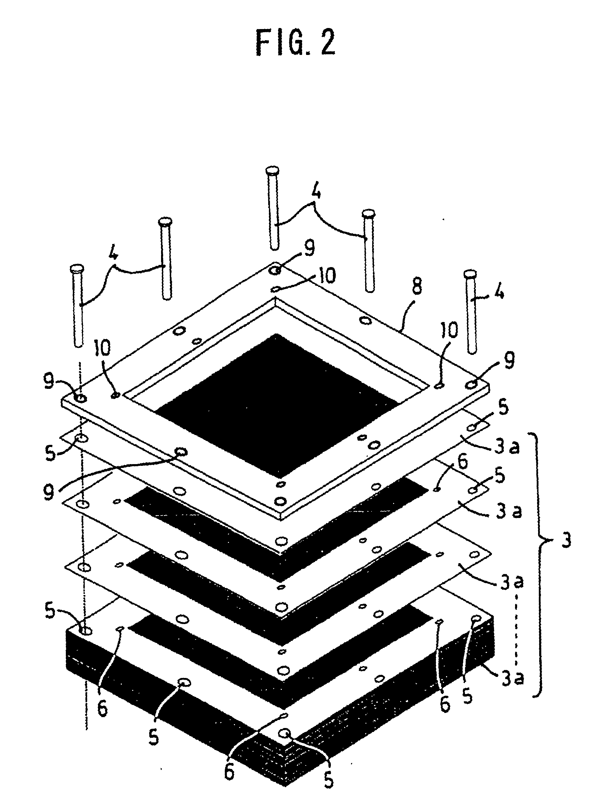

Said radiation detector unit 2 functions to detect γ-rays irradiated from RI distributed in a focus in a subject or a living body, and to output an electric signal, and is configured by an aggregation of a plurality of semiconductor cells such as CdTe. Said plurality of semiconductor cells is arranged in parallel two-dimensionally in an approximately square plane, such that, for example, a space resolution of about 1mm and an energy resolution of about 5% for 140KeV photon may be achieved. Further, the collimator 3 is composed of a plurality of sheets of collimator elements 3a, which are stacked one on the other as shown in Fig. 2.

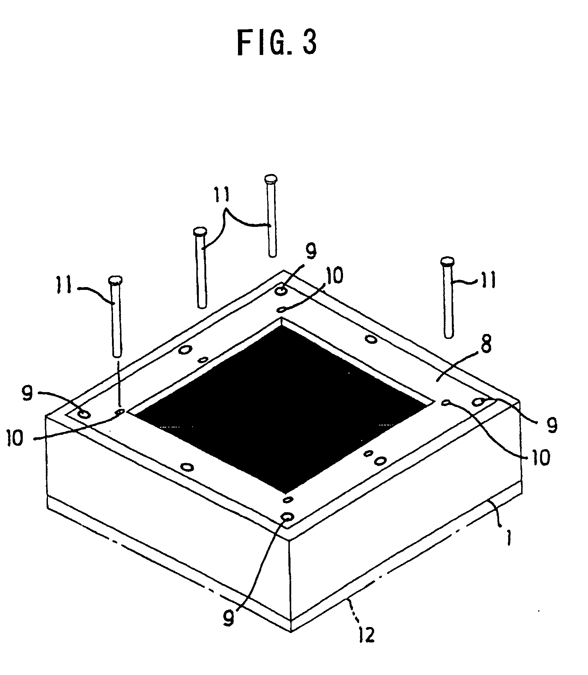

A plurality of through-holes 5 is formed in a periphery of said collimator elements 3a for inserting screws 4 in order to connect said respective collimator elements 3a, and also another plurality of through-holes 6 is arranged in the collimator elements 3a inside said through-holes 5, for inserting screws 11 shown in Fig. 3 in order to interconnect said respective collimator elements 3a together. In addition, a plurality of threaded holes 7 is arranged in said thicker section 1b for receiving the screws 4 having inserted through said respective through-holes 5 and screwed thereinto.

Further, reference numeral 8 is a retaining plate stacked on a top of the collimator elements 3a, and has a plurality of through-holes 9 and another plurality of through-holes 10 formed respectively therein so as to correspond in locations and sized to those of said through-holes 5 and 6. The retaining plate 8 makes it possible to hold the plurality of collimator elements 3a in one unit within the frame 1 by screwing in the screw 4 having inserted through said through-holes 9 and 5 into said threaded hole 7.

Further, as shown in a reversed perspective view of Fig.3, the screw 11 is inserted through the through-hole 10 of the retaining plate 10 and the through-hole 6 of the collimator element 3a, and an end of said screw 11 is screwed in a threaded hole 2a formed in the radiation detector unit 2 so as to interconnect them into one unit.

In Fig. 3, reference numeral 12 is a liquid crystal display unit which is stacked on an under surface (in the drawing) of the frame 1 integrally or detachably therewith. Said liquid crystal display unit 12 comprises a pre-amplifier for amplifying a low level γ-ray detection signal outputted from the radiation detector unit 2, an A/D converter for converting an output from said pre-amplifier into digital form, a controller for based on an output from said A/D converter, collecting an energy spectrum which is obtained by decomposing a frequency of the γ-rays having entered within a predetermined time period with respect to an energy axis, a waveform shaping section for removing noise in a signal wave obtained through said controller and also removing a cross-talk component therein, an image processing section for converting a distribution of the γ-rays in the living body into an image data based on an output from said waveform shaping section and a detected location of the radiation, an image memory for temporarily saving said image data, a liquid crystal display panel, and the like.

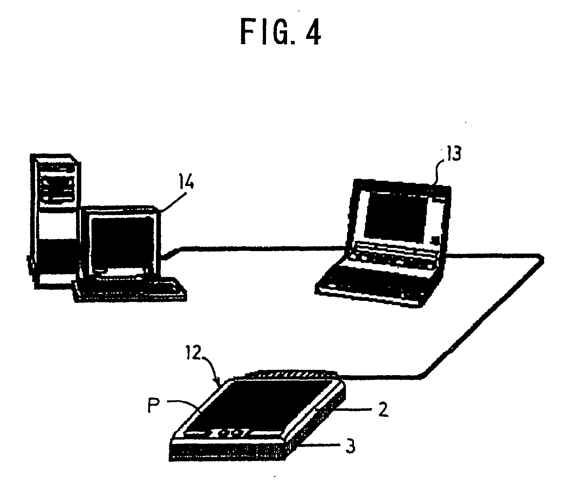

Fig. 4 conceptually shows a general configuration of a probe P for nuclear medical diagnosis according to the present invention, comprising said radiation detector unit 2, said collimator 3 and said liquid crystal display unit 12, wherein said probe P for nuclear medical diagnosis is connected to a portable computer 13 installed in an operation room and a master computer 14 installed in an outside of the operation room via a LAN cable or the like. It is to be noted that, the portable computer 13 functions so as to indicate or display, for example, a procedure of the operation and/or important items on the operation according to a predetermined program, and the master computer 14 functions, for example, so as to transmit a patient information and/or an operation information about the patient to the portable computer 13, to receive various information during the operation from the probe via the portable computer 13 and to monitor and/or save them.

Since thus configured probe for nuclear medical diagnosis is small in its size, the collimator 3 can be easily moved by hand to a location on a body surface above a site supposed as a focus of the subject during the operation and the retaining plate 8 of the collimator 3 can be brought into direct contact with or close to the body surface.

Accordingly, the radiation irradiated from the RI distributed in the focus is firstly controlled by the collimator 3 so as to have an appropriate incident direction, and then enters the radiation detector unit 2, where an input level of radiation having entered is detected for each of said plurality of semiconductor cells and converted into an electric signal.

After having been amplified by said pre-amplifier, said electric signal is converted into a digital signal, and a frequency of the radiation having entered during predetermined time period is collected as an energy spectrum, and after having been processed to remove noise in the obtained signal, said energy spectrum is displayed as an image representative of an pattern of the disease state on the liquid crystal panel.

Since as a whole, thus configured probe for nuclear medical diagnosis has, for example, a so-called palm size such as 5cm x 5cm and 1cm to 2cm thick, therefore said probe can be handled easily during operation, that is, can be brought into contact with or close to the body surface, which allows, for example, to clearly display a progress or current state of disease of malignant tumor such as cancer developed in head, neck or breast as an RI image during operation and makes it possible for the operator to directly observe and/or monitor it within his/her reach.

Accordingly, in this RI probe system, for example, an enucleation of a cervical lymph node of mouth cancer in an oral cavity area has been made possible. Recently, an enucleating operation of a cervical lymph node metastasis is changing from a radical cervical enucleation, through a retentive cervical enucleation to a functional cervical enucleation, and finally up to a selective neck dissection.

This method allows to enucleate only a minimum requisite cervical anatomical section so as to reduce an invasive level of the operation, and to make a contribution to preservation and/or retention of a function. That is, this method makes a contribution to the preservation of the function of the patient living body as well as an avoidance of unnecessary surgical operation.

It is to be noted that an observation of the patient by this type of RI image may be undoubtedly achieved by a development and improvement of radioactive medical supplies introduced into a diseased part, and ultimately makes a contribution to an improvement of the medical technology. According to the above configuration, a detection of the X-rays may be carried out in the similar manner.

### Applicability in Industrial Field

As having been described above, since according to the present invention, there has been provided such a system comprising the collimator for controlling an incident direction of a radiation from a subject and the radiation detector unit disposed adjacent to said collimator for detecting the radiation obtained through said collimator, wherein based on the detected data of the radiation obtained from said radiation detector unit, a distribution of the radiation energy in the subject is indicated as an image on the liquid crystal display unit, therefore the RI in the focus may be detected only by bringing the system into contact with or close to the body surface so as to indicate the detected result on the display section installed integrally with the RI detector unit, and accordingly, there is provided an advantage that the operator can make an operation of excision and/or enucleation of the tumor efficiently while observing a change and/or current state of disease during operation indicated on the display section within his/her reach, and consequently preserving the function of the patient as well as avoiding unnecessary surgical operation.

Further, according to the present invention, since said collimator and said radiation detector unit are held in surroundings thereof by the frame made of material containing lead, the radiation irradiated from the space to the frame can be intercepted, and accordingly the radiation only from the diseased part to be monitored can be guided to the radiation detector unit, which provide another advantage that the detecting accuracy (setting accuracy of coordinate position on the display) of the focus site which is the detected location of the radiation can be improved.

## Claims

1. A probe for nuclear medical diagnosis comprising a collimator for controlling an incident direction of a radiation from a subject, a radiation detector unit disposed adjacent to said collimator for detecting the radiation obtained through said collimator, and a liquid crystal display unit for indicating a distribution of radiation energy in said subject as an image based on a detected data of the radiation obtained from said radiation detector unit.

2. A probe for nuclear medical diagnosis in accordance with claim 1, in which said collimator and said radiation detector unit are held in surroundings thereof by a frame made of material containing lead.
